# EUROPÄISCHE PATENTSCHRIFT

(11) **EP 1 290 094 B1**
(45) Veröffentlichungstag und Bekanntmachung des Hinweises auf die Patenterteilung: **29.09.2004**
(21) Anmeldenummer: 01947184.6
(22) Anmeldetag: 06.06.2001
(51) Int. Cl.: C09D 11/00, C04B 41/50

(54) **HOCHTEMPERATURBESTÄNDIGES MARKIERUNGSMITTEL, INSBESONDERE TINTE**
HIGH TEMPERATURE RESISTANT MARKING AGENT, ESPECIALLY INK
PRODUIT DE MARQUAGE A RESISTANCE THERMIQUE ELEVEE, NOTAMMENT ENCRE

(30) Priorität: 16.06.2000 DE 10029762
(43) Veröffentlichungstag der Anmeldung: 12.03.2003
(73) Patentinhaber: Siemens Aktiengesellschaft, 80333 München (DE)
(72) Erfinder: HARTANTO, Vincentius, 13581 Berlin (DE)
(86) Internationale Anmeldenummer: PCT/DE2001/002127
(87) Internationale Veröffentlichungsnummer: WO 2001/096482

(56) Entgegenhaltungen:
- US-A- 5 443 629
- US-A- 5 714 236

## Beschreibung

Die Erfindung bezieht sich auf ein hochtemperaturbeständiges Markierungsmittel, insbesondere Tinte zur Aufbringung auf eine Oberfläche, insbesondere eine keramische Oberfläche.

Eine,derartige Tinte ist beispielsweise aus der US-Patentschrift 5,055,137 bekannt. Die bekannte Tinte dient dem Markieren von Körpern. Die hochtemperaturbeständige Tinte ist auf kalte oder heiße Oberflächen aufbringbar. Zum Erreichen der Hochtemperaturfestigkeit wird eine Mischung einer Vielzahl verschiedner Oxide verwendet, die jeweils eine bestimmte molare Masse aufweisen. Weiterhin werden verschiedene Zuschlagstoffe wie Graphit, Metalle, Sulfide usw. als Stabilisatoren verwendet.

Der vorliegenden Erfindung liegt die Aufgabe zugrunde, ein hochtemperatubeständiges Markierungsmittel der eingangs genannten Art aus einer geringeren Anzahl von preiswerteren Chemikalien herzustellen.

Die Aufgabe wird bei einem hochtemparaturbeständigen Markierungsmittel der eingangs genannten Art erfindungsgemäß dadurch gelöst, dass das Markierungsmittel

| | |
|---|---|
| 17 - 20 | Masseteile Eisen(III)-Nitrat-Nanohydrat, |
| 14 - 15 | Masseteile Kaliumhexacyanoferrat(II)-Trihydrat, |
| 2,5 - 10 | Masseteile 25%-ige Ammoniaklösung sowie |
| 160 - 200 | Masseteile destilliertes Wasser |

enthält.

Bei den verwendeten Chemikalien handelt es sich um preiswerte pro Analyse-Chemikalien und destilliertes Wasser. Diese Stoffe sind kostengünstig beziehbar und in ausreichender Menge verfügbar. Das hochtemperaturbeständige Markierungsmittel enthält keine hochtemperaturkorrosiven Bestandteile. Nach einer Temperatureinwirkung auf das Markierungsmittel von mehr als 500°C liegen praktisch nur noch Eisenoxide vor. Die mit dem neuartigen Markierungsmittel vorgenommenen Markierungen sind sowohl vor einer Temperatureinwirkung als auch nach der Temperatureinwirkung gut lesbar. Die Markierung hält Temperatureinwirkungen von bis zu 1500°C stand. Vor einer Temperatureinwirkung weist das Markierungsmittel eine blaue Farbe auf. Nach einer Temperatureinwirkung von ca. 500°C schlägt die Farbe in einen braunen Farbton um. Das Markierungsmittel lässt sich unter atmosphärischen Bedingungen durch portionsweises Zugeben und Vermischen der einzelnen Chemikalien mit dem destillierten Wasser herstellen.

Im Folgenden wird die Erfindung anhand eines Ausführungsbeispieles näher beschrieben.

Das Kaliumhexacyanoferrat(II)-Trihydrat {K₄[Fe(CN)₆] .3H₂O} wird in einer vorbestimmten Menge destillierten Wasser {H₂O}aufgelöst. Ein leichtes Erwärmen unterstützt den Lösevorgang. Anschließend wird das Eisen(III)-Nitrat-Nanohydrat {Fe(NO₃)₃.9H₂O} portionsweise der bestehenden Lösung zugegeben und gut vermischt. Zur Neutralisation der Lösung wird eine 25%-ige Ammoniak-Lösung {NH₃} hinzugegeben. Die Lösung ist auf einen pH-Wert von 6 bis 7 zu neutralisieren. Nach längerer Standzeit ist ein Absetzen von festen Bestandteilen der Lösung zu beobachten. Deshalb ist vor jeder Anwendung ein gutes Durchmischen der Lösung notwendig.

Um 100 g des hochtemperaturbeständigen Markierungsmittels zu erzeugen, sind 188 g Eisen(III)-Nitrat-Nanohydrat und 147 g Kaliumhexacyanoferrat(II)-Trihydrat notwendig. Zum Erzielen einer gebrauchsfertigen Konsistenz des fertigen Markierungsstoffes werden ca. 1600 ml destilliertes Wasser benötigt. Zur Neutralisation werden 25 ml 25%-ige Ammoniak-Lösung zugegeben.

Das hochtemperaturbeständige Markierungsmittel ist beispielsweise mittels eines geeigneten Stempels, Pinsels oder Faserschreibers auf die Oberfläche des zu markierenden Körpers aufbringbar.

Der Markierungsstoff ist beispielsweise zur dauerhaften Markierung von in Gasturbinen enthaltenen Brennkammersteinen verwendbar.

## Patentansprüche

1. Hochtemperaturbeständiges Markierungsmittel, insbesondere Tinte zur Aufbringung auf eine Oberfläche, insbesondere eine keramische Oberfläche,
**dadurch gekennzeichnet,**
**dass** das Markierungsmittel
| | |
|---|---|
| 17 - 20 | Masseteile Eisen(III)-Nitrat-Nanohydrat, |
| 14 - 15 | Masseteile Kaliumhexacyanoferrat(II)Trihydrat, |
| 2,5 - 10 | Masseteile 25%-ige Ammoniaklösung sowie |
| 160 - 200 | Masseteile destilliertes Wasser |
enthält.

## Claims

1. High temperature resistant marking agent, especially ink, for application to a surface, especially a ceramic surface,
**characterized in that**
the marking agent comprises
| | |
|---|---|
| 17 - 20 | parts by mass of iron(III) nitrate nanohydrate, |
| 14 - 15 | parts by mass of potassium hexacyanoferrate(II) trihydrate, |
| 2.5 - 10 | parts by mass of 25% strength ammonia solution and |
| 160 - 200 | parts by mass of distilled water. |

## Revendications

1. Produit de marquage résistant aux hautes températures, notamment encre à déposer sur une surface, notamment une surface céramique,
**caractérisé**
**en ce que** l'agent de marquage contient
de 17 à 20 parties en poids de nitrate de fer (III) nanohydraté,
de 14 à 15 parties en poids de ferrocyanure de potassium (II) trihydraté,
de 2,5 à 10 parties en poids d'une solution d'ammoniac à 25 %, ainsi que
de 160 à 200 parties en poids d'eau distillée.
